# EUROPEAN PATENT APPLICATION

(11) **EP 2 262 173 A1**
(43) Date of publication of application: **15.12.2010**
(21) Application number: 09305529.1
(22) Date of filing: 10.06.2009
(51) Int. Cl.: H04L 12/26, H04L 12/56

(54) **Network management method and agent**

(71) Applicant: Alcatel Lucent, 75008 Paris (FR)
(72) Inventor: Van Ewijk, Adrianus, 2180, Ekeren (Antwerpen) (BE); Davies, Paul, 2018, Antwerpen (BE); Sold, Haran, 2101ZL, Heemstede (NL)
(74) Representative: BiiP cvba

(57) **Abstract**

In the network management method according to the invention network flow information (102) is obtained from network management probes (231, 232) and application traffic profile information (101) is obtained from a source database (201). The network flow information (102) and the application traffic profile information (101) are correlated. Based on the correlation results, traffic policy rules are generated and installed in network elements via network management signals (216, 217).

## Description

### Field of the Invention

The present invention generally relates to communication networks like for instance the Internet. The invention more particularly concerns network or traffic management, i.e. controlling or influencing traffic flows in a network using a-priory knowledge on sources of traffic and applications or services delivered over the network.

### Background of the Invention

Network operators and Internet Service Providers (ISPs) are facing an increasing need to monitor and control traffic and applications that are delivered over their networks by specific sources. Identification and a better understanding of the applications that cause traffic increases in the operator's network will enable the operator or ISP to negotiate and install source specific traffic policies in its network.

An existing tool for monitoring and controlling traffic is called Deep Packet Inspection (DPI) or Complete Packet Inspection, described for instance in Wikipedia at the following URL:
http://en.wikipedia.org/wiki/Deep_packet_inspection
DPI consists in creating a packet inspection point in the data path where packet inspection hardware can identify the type of traffic where a packet belongs to. Knowing the traffic category where a packet belongs to, for instance TCP (Transmission Control Protocol) or HTTP (Hypertext Transfer Protocol), does not enable to identify the source of the traffic, let aside the application that delivers the packet. Further, DPI devices are installed in the data path and therefore have to inspect and process the packets within very tight delay constraints, i.e. real-time processing at typical speeds of 10 to 40 Gbps (Gigabits per second) in today's networks. DPI devices hence require a high processing power and are therefore rather costly hardware solutions that do not meet the network operator's requirements in terms of identifying the sources and applications of traffic such that policy rules for routing or policing traffic can be derived and applied per source or application.

Known improvements of DPI consist in correlating the contents or behaviour of multiple packets in order to obtain more detailed information on the HTTP or TCP flows. By correlating certain re-directs, or by correlating the content of data packets with the URL that was used to retrieve an HTTP service or with the IP (Internet Protocol) address and MAC (Medium Access Control) address of the subscriber's residential gateway, more advanced DPI devices may be able to obtain or reconstruct more detailed information on the HTTP or TCP flows. However, such correlation techniques further increase the real-time processing requirements for DPI devices, making these devices even more complex and costly, and still do not enable to identify the exact source of traffic, the application that delivers the traffic, or the content of the traffic.

In summary, although DPI devices enable to categorize traffic in some categories, like HTTP, P2P, etc., they do not meet today's requirements for identifying traffic, sources, and applications, and they involve complex and costly hardware for real-time packet processing in the data path. Network or traffic management solutions based on DPI consequently cannot determine and apply policy rules for routing or policing traffic of individual sources or applications.

It is an objective of the present invention to provide a network management method and agent that resolve the above mentioned drawbacks of existing solutions. In particular, it is an objective to provide a network management method and agent that enable network operators and ISPs to install and apply source specific policies in their networks.

### Summary of the Invention

According to the present invention, the above mentioned drawbacks of the prior art are overcome by a network management method as defined in claim 1, comprising the steps of:
- obtaining network flow information from network management probes;
- obtaining application traffic profile information from a source database;
- correlating the network flow information with the application traffic profile information; and based thereon:
- generating traffic policy rules; and
- installing the traffic policy rules in network elements via network management signals.

Thus, by using specific a priori knowledge on the traffic sources and applications, i.e. the application traffic profile information available from a source database, and by correlating the information extracted from this source database with network flow information from probes in the network, the traffic can be influenced at the network layer and/or transport layer via traffic policy rules that can be source and/or application specific. In case of the Internet, the network flow information can for instance be the IP 5-tuple (IP source address, IP destination address, IP source port, IP destination port, protocol) that may be extracted from the packets by a probe in the network, e.g. a DPI device. The source database stores addresses, ports, protocols and application traffic profiles for every important traffic source, e.g. server, on the network, and is supposed to be populated and maintained by a dedicated scout agent that contacts popular or important traffic sources in the network to collect this information. In case of the Internet, the address information stored in the source database corresponds to the IP address of the traffic source, the port information corresponds to the source port number, and the protocol information corresponds to TCP (Transmission Control Protocol) or UDP (User Datagram Protocol). The application traffic profile information contains all important cross-layer information of the IP traffic sources and must therefore at least identify the application(s) supported by the IP traffic source, the codecs used, and a description of the temporal properties of the sourced IP traffic such as the average bit rate, burst size, jitter, etc. The network management method according to the current invention, based on correlation of network flow information with information extracted from a source database, has increased specificity of the traffic sources and applications. As a consequence, its accurateness in identifying and characterizing traffic sources and applications is much better. An advantage thereof is that traffic policing rules for individual traffic sources or traffic sources from a specific service provider can be generated and installed in network elements such as routers, policing functions, etc.

Optionally, as defined by claim 2, the network management signals in the method according to the present invention may take the form of an Access Control List or ACL.

Indeed, one way to install the traffic policy rules in network elements such as routers or policing functions, is by generating an Access Control List and forwarding the Access Control List to the network element that has to apply the traffic policy rules. The Access Control Lists may be equipment vendor specific.

Further optionally, as defined by claim 3, the traffic policy rules may comprise a rule for upgrading a Quality of Service marking or QoS marking of certain traffic in a router.

Thus, the application traffic profile information obtained from the source database may be used to define Quality of Service or QoS marking rules that are installed in routers, e.g. edge IP routers. The information from the source database, after correlation with the network flow information, thereto may be translated automatically and dynamically into a limited set of QoS marking rules or Access Control Lists for specific applications. For instance, one rule can instruct a router to change the QoS marking of packets with a specific IP source address and IP source port that pass the router. Based on that rule, the router will then mark traffic that matches the criterion. This way, the packets that match the criterion will receive a specific QoS treatment in the ISP's network.

Alternatively, as is indicated by claim 4, the traffic policy rules may comprise criteria for re-routing certain traffic in a router.

Thus, as an alternative to influencing the QoS marking, the traffic policy rules may cause packets from a specific source and/or application to take a specific route in the ISP's network.

In another alternative, defined by claim 5, the traffic policy rules comprise traffic policing criteria for a policing function.

Thus, instead of imposing QoS marking rules and/or re-routing criteria on the routers, the network management method according to the current invention may generate policing criteria, i.e. conditions to drop packets, and impose these policing criteria on one or more policing functions in the network.

As is indicated by claim 6, the application traffic profile information in the network management method according to the current invention at least comprises:
- information indicative for an application supported by a traffic source,
- information indicative for a codec used to encode/decode content delivered by the traffic source; and
- information indicative for temporal properties of traffic delivered by the traffic source.

The information indicative for the supported application may for instance identify the type of application, e.g. video or audio, or may be more specific and identify for instance the exact video application like Hulu, Youtube, iTunes, Bittorent, etc. The information indicative for the codec used may for instance identify the encoding mechanism, like mp4, h264, etc. in case of video traffic, or mp3, wav, etc. in case of audio. The information indicative for temporal properties of the traffic can be extracted from the Quality of Service profile of the traffic source, and will typically contain parameters like the average video bit rate, the burst size, jitter, etc.

As is indicated by claim 7, the network flow information in the method according to the current invention may comprise:
- source address information and destination address information for a traffic flow;
- source port information and destination port information for the traffic flow;
- protocol information for the traffic flow;
- Quality of Service marking for the traffic flow; and
- information indicative for a physical interface whereon the traffic flow traversed.

In case of the Internet, the source address will be the source IP address in the header of IP packets belonging to the traffic flow under consideration. The destination address will be the destination IP address that can be extracted from the same IP packet header. The source and destination port information will correspond to the IP source port number and IP destination port number used by that flow. The protocol information protocol information corresponds to TCP (Transmission Control Protocol) or UDP (User Datagram Protocol). The foregoing information extracted from the IP packets by a probe or packet inspection function in the network, constitutes the IP 5-tuple. Further, the QoS marking like for instance the TOS (Type Of Service) bit can be extracted from the packet header through packet inspection, and the physical interface whereon the IP packet traversed can be identified by the probe in the network that extracts the network flow information.

Optionally, as is defined by claim 8, the method according to the invention may further comprise:
- generating traffic reports accessible by a network operator via a dedicated portal.

Indeed, by correlating the network flow information with the information obtained from the source database, detailed traffic reports may be built for network operators or service providers. In particular when the source database also stores application metadata such as the name of the application or service, the company offering the service, the content delivery network, the domain offering the service, the URLs or links involved in delivering the service, the applications involved in delivering the service, the geographical location of the servers involved in delivering the service, the delivered content, the company that is the source of the content, etc., the results of the correlation will not only be useful for generating and installing traffic policy rules, but will also be useful to build and deliver detailed reports on the traffic from specific sources or applications, that can be made accessible to the network operator or service providers via a dedicated portal or interface.

In addition to a network management method as defined by claim 1, the current invention also relates to a corresponding network management agent as defined by claim 9, comprising:
- means for obtaining network flow information from network management probes;
- means for obtaining application traffic profile information from a source database;
- means for correlating the network flow information with the application traffic profile information;
- means for generating traffic policy rules; and
- means for installing the traffic policy rules in network elements via network management signals.

The network management agent can for instance be a set of computer programs installed in a network management platform of the network operator or ISP.

### Brief Description of the Drawings

Fig. 1 illustrates the obtaining of data in an embodiment of the network management method according to the present invention; and

Fig. 2 illustrates the sequence of steps in an embodiment of the network management method according to the present invention.

### Detailed Description of Embodiment(s)

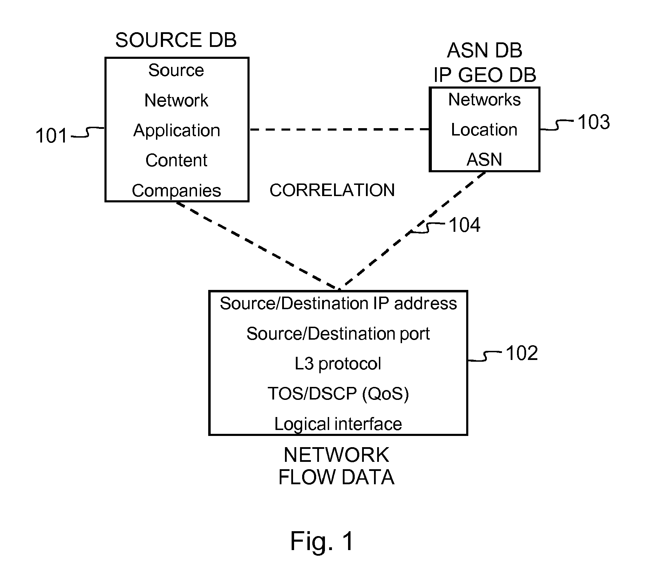

Fig. 1 shows information 101 obtained from a source database, SOURCE DB, and network flow information, 102 or NETWORK FLOW DATA, that lie at the basis of the invention. Fig. 1 further shows information 103 obtained from an ASN (Autonomous System Number) database, ASN DB, and obtained from geographic databases, IP GEO DB, that may optionally be used in embodiments of the current invention as supplemental information.

The basic insight underlying the embodiment illustrated by Fig. 1 is that traffic flows in an IP network can be influenced by correlating specific a-priory knowledge 101 on application sources contained in an IP source database with network flow data 102 received from probes in the network, for instance NetFlow or other IP flow data (e.g. IPFIX, CFLOWD, SFLOW, etc.) received from a NetFlow traffic analyzer, routers, policing functions, packet inspection devices, etc.

The IP source database from which information 101 is obtained is a database of IP addresses and ports of every important computer (e.g. server) on the Internet and of the applications that are delivered from these IP addresses. It stores all important cross-layer information of IP sources and applications in the application traffic profile of a traffic source. This includes, besides network address and protocol information, information about the source, about the network, about the application(s) or service(s) delivered, about the content delivered, and about the companies that are involved in the full delivery chain of the application.

"Source" information includes the IP source address, the source port number, the protocol used (e.g. UDP, TCP) and eventually the geographic location of the source. The latter geographic information may be obtained from the IP GEO DB database. "Network" information includes an identification of the content delivery network and its assigned address range that can be obtained from the ASN DB database. "Application" information includes the name of the application or service (e.g. iTunes, YouTube, Joost, Hulu, etc.), the traffic class and traffic type (video, audio, etc.). "Content" information includes for instance the file name and the name of the company that created or owns the content (e.g. NBC, RTL, etc.). "Company" information may include the name of companies offering applications or services (e.g. Google, Apple, etc.), the name of companies operating the content delivery network (e.g. Akamai, Limelight, etc.), and the name of companies creating content (e.g. NBC, RTL, etc.), if not yet included in the foregoing.

The network flow data 102 obtained from probes in the network like NetFlow traffic analyzers includes the IP 5-tuple consisting of source IP address of a flow, destination IP address of a flow, source port number, destination port number, and Layer 3 or transmission layer protocol (e.g. TCP or UDP). In addition the network flow data 102 also contain the Quality of Service or QoS marking, like for instance the Type Of Service (TOS) bit or the Differentiated Services Code Point (DSCP) value extracted from the packets in the flow. Further, the network flow data 102 contain an identification of the logical or physical interface traversed by the flow. Other examples of network flow data besides NetFlow are CFLOWD, IPFIX and for instance SFLOW.

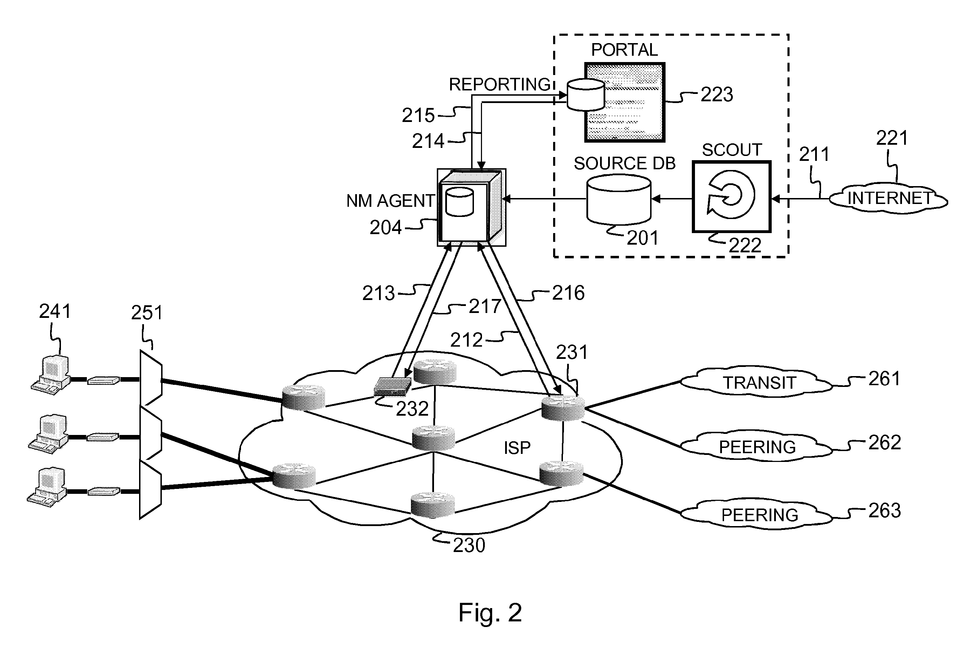

By correlating the information 101 in the IP source database SOURCE DB with the network flow data 102 as is indicated by 104 in Fig. 1, traffic policy rules can be generated and traffic in the IP network can be influenced in real time at the network and/or transport layer. As will be illustrated in the following paragraphs with reference to Fig. 2, the correlation result can be used to generate network management signals (e.g. SNMP or Simple Network Management Protocol traps) based on the application traffic without having to install expensive network appliances in the network.

Fig. 2 shows an ISP's network 230 over which video applications, i.e. streaming video and peer-to-peer video applications are delivered to clients 241 that connect with the ISP's network 230 via an access network 251, e.g. a DSL (Digital Subscriber Line) network. Fig. 2 shows transit clouds, 261 or TRANSIT, and peering clouds, 262 and 263 or PEERING. The applications are delivered across these clouds.

Fig. 2 illustrates with arrow 211 a process wherein a scout agent, 222 or SCOUT, collects info on important video sources in the Internet 221 by emulating clients and determines domain names associated with these video sources. The scout agent 222 thereupon collects IP source and application traffic profile information for these video sources and builds the IP source database, 201 or SOURCE DB. The process of populating and maintaining the IP source database 201 is described in more detail in a counterpart patent application from the same applicant, entitled "Method and Scout Agent for Building a Source Database" that is incorporated herein by reference.

As a result, the IP source database 201 contains network information like IP addresses, ports and protocol information (UDP/TCP) of important video sources, and also information about the video applications that are delivered from these IP addresses, the type of traffic they deliver (e.g. streaming video or peer-to-peer video), the delivered video content, the domain and the geographic location of the server(s) that deliver the content, the companies that are the source of the video content, and the content delivery network (CDNs) that deliver the video content.

The network management agent, 204 or NM AGENT, collects IP flow data from network management probes in an ISP's network 230, e.g. a NetFlow traffic probe 232, a DPI device integrated in router 231, etc. It is noticed that alternatively, the Netflow data can also come directly from a router without integrated DPI device or without using a dedicated NetFlow agent. This is illustrated by the arrows 212 and 213 in Fig. 2. The IP flow information will indicate IP 5-tuples (IP source address, IP destination address, IP source port, IP destination port, protocol), plus the QoS marking and physical interface on which the IP flow traversed. This IP 5-tuple info can be correlated with the information in the IP source database 201 to determine what service is being used. The correlation may involve querying the source database 201 using the IP 5-tuple. This can be done manually or automatically. In the scenario where it is done manually, the ISP will use the IP source DB 201 to define what application sources he would like to manage. For instance if an ISP wants to manage hulu.com traffic, the operator can query the IP source DB 201 to retrieve the IP source information that is relevant for his network situation, e.g. depending on the geographic location. The IP source database 201 will provide the IP source information relevant for hulu.com.

The information contained in the database 201 is thereupon used by the network management agent 204 to define QoS marking rules (e.g. Access Control Lists or ACLs) that are installed in network elements like edge router 231 and the NetFlow traffic probe 232. The IP source database information is automatically and dynamically translated into a limited set of QoS marking rules or ACLs for specific subscribers, IP sources or applications. For example, a rule can instruct the router 231 and the NetFlow traffic probe 232 to mark each packet with a specific source IP address and port that passes the router 231 or NetFlow traffic probe 232. The rule is installed in router 231 and NetFlow traffic probe 232 through network management signaling as is indicated by arrows 216 and 217. Based on such rule the router 231 and NetFlow traffic probe 232 will mark traffic that matches the criterion. The traffic QoS marking may cause the packets to take a specific route in the ISP's network 230 or to receive specific QoS treatment.

As an alternative to QoS marking, the network management agent 204 may define rules for route optimization (e.g. changing the next hop address in routing tables for certain sources or applications), or rules for dropping/accepting packets to be installed in policing functions in the network 230.

Fig. 2 further shows that the network management agent 204 retrieves network flow information in 212 and 213, and correlates this with the IP source database 201 to generate reports, referenced by REPORTING. A dedicated portal, 223 or PORTAL, thereto sends management request to the network management agent 204, as indicated by arrow 214. The network management agent 204 thereupon reports source and/or application performance to the portal 223, as is indicated by arrow 215.

It is further noticed that the QoS marking rules installed according to the current invention by the network management agent 204 can also be used for accounting and billing.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A network management method, said method comprising the steps of:
- obtaining network flow information (102) from network management probes (231, 232);
- obtaining application traffic profile information (101) from a source database (201);
- correlating said network flow information (102) with said application traffic profile information (101); and based thereon:
- generating traffic policy rules; and
- installing said traffic policy rules in network elements via network management signals (216, 217).

2. A network management method according to claim 1, wherein said network management signals (216, 217) take the form of an Access Control List or ACL.

3. A network management method according to claim 1, wherein said traffic policy rules comprise a rule for upgrading a Quality of Service marking or QoS marking of certain traffic in a router.

4. A network management method according to claim 1, wherein said traffic policy rules comprise criteria for re-routing certain traffic in a router.

5. A network management method according to claim 1, wherein said traffic policy rules comprise traffic policing criteria for a policing function.

6. A network management method according to claim 1, wherein said application traffic profile information (101) comprises:
- information indicative for an application supported by a traffic source,
- information indicative for a codec used to encode/decode content delivered by said traffic source; and
- information indicative for temporal properties of traffic delivered by said traffic source.

7. A network management method according to claim 1, wherein said network flow (102) information comprises:
- source address information and destination address information for a traffic flow;
- source port information and destination port information for said traffic flow;
- protocol information for said traffic flow;
- a Quality of Service marking for said traffic flow; and
- information indicative for a physical interface whereon said traffic flow traversed.

8. A network management method according to claim 1, said method further comprising:
- generating traffic reports accessible by a network operator via a dedicated portal (223).

9. A network management agent (204) comprising:
- means for obtaining network flow information (102) from network management probes (231, 232);
- means for obtaining application traffic profile information (101) from a source database (201);
- means for correlating said network flow information (102) with said application traffic profile information (101);
- means for generating traffic policy rules; and
- means for installing said traffic policy rules in network elements via network management signals (216, 217).
